# EUROPÄISCHE PATENTSCHRIFT

(11) **EP 3 775 773 B1**
(45) Veröffentlichungstag und Bekanntmachung des Hinweises auf die Patenterteilung: **12.07.2023**
(21) Anmeldenummer: 19722502.2
(22) Anmeldetag: 26.03.2019
(51) Int. Cl.: G01B 21/20, G01B 11/02, G01B 11/24, G01B 11/245, G01B 11/25

(54) **3-D-OBJEKT-ERFASSUNGSSYSTEM**
3D OBJECT-SENSING SYSTEM
SYSTÈME DE DÉTECTION D'OBJET 3D

(30) Priorität: 29.03.2018 DE 102018002622
(43) Veröffentlichungstag der Anmeldung: 17.02.2021
(73) Patentinhaber: Twinner GmbH, 06112 Halle (Saale) (DE)
(72) Erfinder: BUGOVICS, Jozsef, 04109 Leipzig (DE)
(74) Vertreter: Weihrauch, Frank
(86) Internationale Anmeldenummer: PCT/DE2019/000091
(87) Internationale Veröffentlichungsnummer: WO 2019/185079

(56) Entgegenhaltungen:
- US-A1- 2012 056 982
- US-A1- 2014 112 573
- BUCKLEY SIMON J ET AL: "Terrestrial lidar and hyperspectral data fusion products for geological outcrop analysis", COMPUTERS AND GEOSCIENCES, PERGAMON PRESS, OXFORD, GB, Bd. 54, 8. Februar 2013 (2013-02-08), Seiten 249-258, XP028525895, ISSN: 0098-3004, DOI: 10.1016/J.CAGEO.2013.01.018
- HALL D L ET AL: "An Introduction to Multisensor Data Fusion", PROCEEDINGS OF THE IEEE, IEEE. NEW YORK, US, Bd. 85, Nr. 1, 1. Januar 1997 (1997-01-01) , Seiten 6-23, XP011043797, ISSN: 0018-9219, DOI: 10.1109/5.554205

## Beschreibung

Die Erfindung betrifft ein 3-D-Objekt-Erfassungssystem zur Bereitstellung eines digitalen Abbilds des zu erfassenden 3-D-Objekts.

Nach dem Stand der Technik ist es dem Grunde nach bekannt, räumliche Objekte insbesondere nach ihrer äußeren Geometrie zu erfassen.

Dies kann nach dem Stand der Technik zum einen über taktile Verfahren erfolgen, welche den Vorteil einer hohen Genauigkeit von Erfassungspunkten aufweisen. Nachteilig ist es aber dass eine hohe Anzahl von Erfassungspunkten einen sehr hohen Zeitaufwand bedingen. Die erzeugten Punktewolken sind zudem nachteligerweise in der Regel nicht ausreichend, ein wirklichkeitsnahes digitales Abbild des zu erfassenden räumlichen Objekt zu erzeugen.

Ferner ist es aus dem Stand der Technik dem Grunde nach bekannt, räumliche Objekte über fotometrische oder akustische Verfahren nichttaktil zu erfassen. Nachteiligerweise hängt die Nutzbarkeit solcher Verfahren erheblich von der Oberflächenbeschaffenheit des zu erfassenden räumlichen Objekts ab und kann insbesondere bei inhomogenen Oberflächen versagen.

Ferner ist es durch US 2012/0056982 bekannt, durch eine Kombination mehrerer Sensoren wie Tiefenkameras oder Stereokameras die Entfernung sowie die Bewegung eines Objekts besser zu erfassen als nur mit einer einzelnen Kamera. Nachteilig ist hierbei, dass mittels dieser Lösung lediglich Informationen zur einer Lagebeziehung und zur Bewegung erhalten werden.

Bezogen auf geologische Formationen wird durch BUCKLEY SIMON J ET AL. "Terrestrial lidar and hyperspectral data fusion products for geological outcrop analysis" in Computers an Geosciences, Pergamon Press, Oxford, GB, Band 54, Seite 249-258 eine Lösung beschrieben, wie die Lage bestimmter geologischer Formationen durch die Kombination von Daten aus verschiedenen Erfassungssystemen besser detektiert werden kann. Auch hier besteht der Nachteil, dass durch diese Lösung lediglich Informationen zur Lage eines Objekts erlangbar sind.

Die Aufgabe der Erfindung ist es, eine störunanfällige und einfach zu bedienende Lösung aufzuzeigen, ein 3-D-Objekt mit möglichst geringem Personalaufwand komplex zu erfassen.

Die Aufgabe wird durch die im Patentanspruch 1 aufgeführten Merkmale gelöst. Bevorzugte Weiterbildungen ergeben sich aus den Unteransprüchen.

Das erfindungsgemäße 3-D-Objekt-Erfassungssystem weist als Grundbestandteile eine Objektpositionierungseinheit, eine Objekterfassungseinheit und eine Auswertungseinheit auf.

Die Objektpositionierungseinheit weist eine Plattform und eine Plattformpositionserfassungseinheit auf.

Die Plattform ist nach Größe und Belastbarkeit so ausgebildet, dass ein räumliches Objekt, nachfolgend als 3-D-Objekt bezeichnet, aufstellbar ist. Die Plattform ist drehbar ausgebildet. Die Drehachse der Plattform entspricht der Vertikalachse des Plattform, so dass die Plattform im Wesentlichen waagerecht angeordnet ist und ein aufgestelltes 3-D-Objekt ohne Befestigung bleiben kann. Die Plattform entspricht damit vorzugsweise der Bauform eines Drehtellers. Somit entspricht die Vertikalachse der Plattform zugleich der Vertikalachse des aufgestellten 3-D-Objekts.

Das 3-D-Objekt selbst ist nicht Bestandteil der erfindungsgemäßen Vorrichtung. Als 3-D-Objekt im Sinne der vorliegenden Anmeldung werden alle räumlich-körperlichen Objekte verstanden. Hierbei kann es sich beispielsweise um Teile mit vorbekannter normativer Sollbeschaffenheit aus einer Fertigung handeln, welche zu Dokumentations- und Überprüfungszwecken erfasst werden sollen. Ferner kann es sich aber auch um Gegenstände von nicht vorbekannter Beschaffenheit handeln, die digital erfasst werden sollen. Insbesondere kann es sich auch um Bauteile handeln, welche zum Ermitteln einer etwaigen Beschädigung oder zum Erkennen zum Zweck einer Ersatzteilidentifikation erfasst werden sollen. Auch Fahrzeuge werden als 3-D-Objekte im Sinne der vorliegenden Anmeldung verstanden.

Die Plattformpositionserfassungseinheit ist so ausgebildet, dass mit ihr Plattformpositionsdaten erfassbar sind. Die Plattformpositionsdaten beschreiben die Winkelstellung der rotierbaren Plattform und damit mittelbar die Winkelstellung des aufgestellten 3-D-Objekts. Wird die Plattform während eines Erfassungsvorgangs gedreht, können so Objektpunkte des 3-D-Objekt, die bei unterschiedlichen Winkelstellungen unterschiedliche Koordinaten im Raum aufweisen, einander zugeordnet werden. Die Plattformpositionsdaten werden für die Übertragung an die Auswertungseinheit übertragbar bereitgestellt. Für die Übertragung der Plattformpositionsdaten sind die Objektpositionierungseinheit und die Auswertungseinheit miteinander datenverbunden.

Die Objekterfassungseinheit weist Einzelerfassungssysteme auf. Erfindungsgemäß weist die Objekterfassungseinheit mindestens zwei Einzelerfassungsysteme aus einer Gruppe bestehen aus:
- 3-D Kamera-Erfassungssystem
- Bildkamera-Erfassungssystem
- Infrarot-Erfassungssystem
- Lasertriangulation-Erfassungssystem
- Musterprojektion-Erfassungssystem
- Deflektometrie-Erfassungssystem
auf.

Alle Einzelerfassungssysteme stellen Raumkoordinatendaten von Objektpunkten des 3-D-Objekts bereit. Die Raumkoordinatendaten aller Einzelerfassungssysteme der Objekterfassungseinheit sind auf ein und dasselbe Raumkoordinatensystem bezogen. Hierzu werden die Einzelerfassungssysteme in dasselbe Raumkoordinatensystem kalibriert. Dieses wird nachfolgend auch als das einheitliche Raumkoordinatensystem bezeichnet.

Vorzugsweise weist die Objekterfassungseinheit mehr als zwei der aufgeführten Einzelerfassungssysteme, vorzugsweise mindestens drei der Einzelerfassungssysteme, besonders bevorzugt mehr als drei der Einzelerfassungssysteme, auf.

Als 3-D Kamera-Erfassungssysteme werden insbesondere Tiefenkamerasysteme, die als TOF (Time of Flight) - Systeme ausgebildet sind, und Stereokamerasysteme verstanden. Mit 3-D Kamera-Erfassungssystemen sind Raumkoordinaten von Objektpunkten als Objektdaten erfassbar.

Bei den Bildkamerasystemen handelt es sich vorzugsweise um Farbbildkamerasysteme, so dass Helligkeits- und Farbwerte von Objektpunkten als Objektdaten erfassbar sind. Auf diese Weise ist insbesondere das äußere Erscheinungsbild des 3-D-Objekts erfassbar.

Infrarot-Erfassungsysteme basieren auf der Thermografie und weisen Infrarotkameras auf, welche die Infrarotstrahlung, die von einem Objektpunkt emittiert wird, als Objektdaten empfängt. Das Infrarot-Erfassungssystem kann dabei sowohl passiv, also ohne vorherige Beaufschlagung des 3-D-Objekts mit Infrarotstrahlung, als auch aktiv, also mit vorheriger Beaufschlagung des 3-D-Objekts mit Infrarotstahlung, erfolgen. Mittels eines Infrarot-Erfassungssystems können unter der Oberfläche des 3-D-Objekts befindliche Materialabweichungung, beispielsweise infolge von Beschädigungen oder Reparaturen und insbesondere Überlackierungen solcher Bereiche erkannt werden.

Ein Lasertriangulation-Erfassungssystem projiziert einen Laserpunkt auf die Oberfläche des 3-D-Objekts und weist eine von der Laserquelle beabstandete Kamera zur optischen Erfassung des Laserpunkts auf, wobei der Winkel des Laserpunktes trigonometrisch ausgewertet wird und sich somit der Abstand des Objektpunktes, der dem Laserpunkt entspricht, ermitteln lässt. Somit lassen sich komplementär zu einem 3-D-Kamera-Erfassungssystem Raumkoordinaten von Objektpunkten des 3-D-Objekts als Objektdaten erfassen.

Ein Musterlichtprojektion-Erfassungssystem, auch als Musterprojektion bezeichnet, projiziert ein Lichtmuster auf die Oberfläche des 3-D-Objekts. Ein wichtiges Beispiel ist die Streifenlichtprojektion. Möglich sind aber beispielsweise auch Punktmuster. Ein Streifenlichtprojektion-Erfassungssystem projiziert einen Lichtstreifen auf die Objektoberfläche. Die von dem Streifenprojektor beabstandete Kamera erfasst die projizierten Lichtstreifen. Es werden anhand des Winkels und trigonometrischer Auswertung die Raumkoordinatendaten der Punkte der Lichtstreifen bestimmt. Wie bei der Lasertriangulation lassen sich auch hier komplementär zu einem 3-D-Kamera-Erfassungssystem Raumkoordinaten von Objektpunkten des 3-D-Objekts als Objektdaten erfassen.

Mittels eines Deflektometrie-Erfassungssystems werden die Spiegelbilder bekannter Muster ausgewertet, um die Form einer Objektoberfläche zu bestimmen. Ein Deflektometrie-Erfassungssystem eignet sich für spiegelnde Oberflächen. Mittels eines Deflektometrie-Erfassungssystems lassen sich somit Raumkoordinatendaten von Objektpunkten von etwaigen Hochglanzoberflächen des 3-D-Objekts wie Glasflächen oder polierten Oberflächenabschnitten als Objektdaten erfassen.

Jedes der Einzelerfassungssysteme weist einen Erfassungsbereich auf. Der Erfassungsbereich umfasst zumindest abschnittsweise das 3-D-Objekt. Die Erfassungsbereiche der Einzelerfassungssysteme überlagern sich und bilden einen gemeinsamen Erfassungsbereich aus. Die Plattform ist so positioniert, dass sich ein aufgestelltes 3-D-Objekt zumindest abschnittsweise in dem gemeinsamen Erfassungsbereich befindet.

Mittels der Objektpositionierungseinheit wird das 3-D-Objekt gedreht. Dabei erfolgt eine sequentielle Durchführung von Erfassungsvorgängen, so dass Erfassungen in einer Vielzahl unterschiedlicher Winkelstellungen der Plattform und damit des 3-D-Objekts durchgeführt werden.

Ferner weist die Objekterfassungseinheit eine Positionierungseinheit auf. Die Positionierungseinheit stellt eine feste Lagebeziehung der Einzelerfassungssysteme zueinander sowie der Einzelerfassungssysteme zu der Objektpositionierungseinheit her. Es handelt sich vorzugsweise um ein Gestell oder einen Rahmen. Die Positionierungseinheit kann auch durch eine Umhausung ausgebildet sein.

Ferner sind Markierungen in dem gemeinsamen Erfassungsbereich angeordnet, um ein Kalibrieren der Einzelerfassungssysteme in dasselbe einheitliche Raumkoordinatensystem zu ermöglichen. Vorzugsweise sind die Markierungen an der Innenseite einer Umhausung angebracht.

Die Objekterfassungseinheit ist ferner dadurch gekennzeichnet, dass mittels jedem der mindestens zwei Einzelerfassungssysteme Objektdaten von Objektpunkten des 3-D-Objekts erfassbar und an die Auswertungseinheit übertragbar bereitstellbar sind. Die Objektdaten enthalten, teilweise zusätzlich, Koordinatendaten der Objektpunkte. Die Koordinatendaten können dabei je nach Einzelerfassungssystem als Raumkoordinantendaten (x, y, z) oder als Flächenkoordinatendaten (x, y) vorliegen.

Die Auswertungseinheit weist Einzelauswertungsmodule, ein Gesamtbewertungsmodul sowie eine Generierungsmodul auf.

Die Auswertungseinheit erhält die Objektdaten von der Objekterfassungseinheit sowie die Plattformpositionsdaten von der Objektpositionierungseinheit.

Die Auswertungseinheit weist für jedes Einzelerfassungssystem ein Einzelbewertungsmodul auf. Das jeweilige Einzelbewertungsmodul führt eine Bewertung einer Erfassungsqualität der Objektdaten durch. Es führt dabei die Bewertung der Objektdaten durch, die an einem definierten Koordinatenpunkt bei einem definierten Erfassungswinkel vorliegen. Der Koordinatenpunkt wird durch die Koordinatendaten des Einzelerfassungssystems und der Erfassungswinkel durch die Plattformpositionsdaten definiert. Auf der Grundlage der Bewertung erfolgt eine Vorkategorisierung dieser Objektdaten anhand eines einstellbaren Qualitätswertes. Erreichen die Objektdaten den einstellbaren Qualitätswert, erfolgt eine Vorkategorisierung als verwertbare Objektdaten. Unterschreiten die Objektdaten den Qualitätswert, erfolgt eine Vorkategorisierung als nicht verwertbare Objektdaten. Der einstellbare Qualitätswert kann beispielsweise durch zulässige Abweichungen von benachbarten Objektpunkten festgelegt werden.

Die Objektdaten aus dieser Erfassung zu diesem bestimmten Objektpunkt fließen in die Gesamtbewertung aus allen Erfassungen zu diesem Objektpunkt sowohl in Bezug auf alle Erfassungswinkel als auch in Bezug auf alle Dimensionen ein. Als Dimension wird jeweils eine Art von Objektdaten und von so gewonnenen Informationen verstanden.

Die Bewertung durch das Einzelbewertungsmodul erfolgt also für jeden Objektpunkt und für jeden zu diesem Objektpunkt durchgeführten Einzelerfassungsvorgang.

Das Einzelbewertungsmodul wird dabei als funktionale Kategorie verstanden, so dass eine sequentielle Abarbeitung der Objektdaten unterschiedlicher Einzelerfassungssysteme durch dieselbe Einheit mit nachfolgender Zwischenspeicherung ebenfalls als jeweils ein Einzelbewertungsmodul je Einzelerfassungssystem verstanden wird. Die Erfassungen der unterschiedlichen Einzelerfassungssysteme und die nachfolgenden Bewertungen der Objektdaten durch Einzelbewertungsmodule können, je nach konkreter Ausbildung, auch parallel erfolgen.

Die verwertbaren Objektdaten werden von den Einzelbewertungsmodulen an das Gesamtbewertungsmodul übertragbar bereitgestellt.

Durch das Gesambewertungsmodul werden anhand der Koordinatendaten zu den Objektpunkten die verwertbaren Objektdaten aus den Einzelbewertungsmodulen und damit aus den Einzelerfassungssystemen einander zugeordnet.

Das Gesamtbewertungsmodul ist so ausgebildet, dass ein Vergleich des Qualitätswertes der verwertbaren Objektdaten eines Einzelerfassungssystems mit dem Qualitätswert der verwertbaren Objektdaten eines weiteren Einzelerfassungssystems durchführbar ist. Auf dieser Grundlage ist eine objektpunktbezogene Rangkategorisierung der verwertbaren Objektdaten der Einzelerfassungssysteme in Abhängigkeit von dem Qualitätswert als primäre Objektdaten und als sekundäre Objektdaten durchführbar. Die Objektdaten zu einem bestimmten Objektpunkt mit dem höchsten Qualitätswert werden als primäre Objektdaten rangkategorisiert. Objektdaten zu diesem bestimmten Obbjektpunkt mit einem niedrigeren Qualitätswert werden als sekundäre Objektdaten rangkategorisiert. Dabei können zu einem Objektpunkt mehrere sekundäre Objektdaten aus mehreren Einzelerfassungssystemen bestehen, während primäre Objektdaten zu einem Objektpunkt nur einmal vorliegen können. Die primären Objektdaten und die sekundären Objektdaten werden dem Generierungsmodul übertragbar zur Verfügung gestellt.

Der Rangkategorisierung liegt also eine Bewertung der Qualität der Objektdaten anhand des Qualitätswerts zu Grunde. Die Bewertung der Qualität kann absolut oder relativ zu der erfassten Datenqualität der Objektdaten erfolgen. Dabei sind neben diskreten Algorithmen auch Algorithmen verwendbar, die eine "n - zu - n" Relation in die Qualitätsbewertung mit eingeziehen. Damit ist es möglich, bei einer geringen Qualität der Objektdaten aus einer Einzelerfassung durch die Nutzung der Objektdaten aus mehreren Erfassungswinkeln und durch die Nutzung der Objektdaten aus mehreren unterschiedlichen Einzelerfassungssystemen jeweils zu demselben Objektpunkt die resultierende Qualität der Objektdaten dennoch zu steigern.

Soweit gemäß einer bevorzugten Variante mindestens drei Einzelerfassungssysteme vorhanden sind und jeweils Objektdaten bereitstellen, kann das Gesamtbewertungsmodul eine Plausibilitätskontrolle in der Weise durchführen, dass ein Vergleich der zu einem bestimmten Objektpunkt erfassten Objektdaten aus den mindestens drei Einzelerfassungssystemen durchgeführt wird und dass ab einem einstellbaren Abweichungsgrad der Objektdaten eines ersten Einzelerfassungssystems von den Objektdaten der weiteren mindestens zwei Einzelerfassungssysteme die Objektdaten des ersten Einzelerfassungssystems verworfen und nicht weiter dem Generierungsmodul übertragbar zur Verfügung gestellt werden.

Das Generierungsmodul ist so ausgebildet, dass es die Koordinatendaten aus den Objektdaten der Einzelerfassungsysteme unter Einbeziehung der Plattformpositionsdaten einem einheitlichen Raumkoordinatensystem zuordnet. Bei unterschiedlichen Winkelstellungen der Plattform liegen unterschiedliche Koordinatendaten der Objektdaten ein und des selben Objektpunktes des 3-D-Objekts vor. Trotzdem kann eine eindeutige Zuordnung aller Objektdaten, die sich auf ein und den selben Objektpunkt beziehen, auf diesen Objektpunkt erfolgen, da der Auswertungseinheit zusätzlich die Plattformkoordinatendaten bekannt sind. Auf der Grundlage der primären Objektdaten wird zunächst ein digitales Basisabbild des 3-D-Objekts in dem einheitlichen Raumkoordinatensystem erzeugt. Die primären Objektdaten weisen somit eine Leitfunktion auf.

Das so erzeugte digitale Basisabbild beruht zunächst nur auf den Koordinatendaten sowie den weiteren Daten aus den primären Objektdaten.

Das digitale Basisabbild des 3-D-Objekts wird von dem Generierungsmodul nun durch Hinzufügung der sekundären Objektdaten anhand der Koordinatendaten zu einem digitalen Abbild des 3-D-Objekts ergänzt. Das digitale Abbild wird ausgebbar bereitgestellt.

Das 3-D-Objekt-Erfassungssystem ermöglicht als besonderen Vorteil die Erzeugung eines einheitlichen digitalen Abbilds eines 3-D-Objekts auf der Basis von mehreren Einzelerfassungssystemen.

Es liegen somit zu jeweils ein und demselben Objektpunkt Objektdaten aus unterschiedlichen Einzelerfassungssystemen vor, was auch als Multi-Layer-Information bezeichnet wird.

Dabei können sich vorteilhaft die Einzelerfassungssysteme zum einen wechselseitig unterstützen. Dies kann insbesondere bei der Ermittlung der Raumkoordinatendaten der Fall sein, indem für opake Abschnitte des 3-D-Objekts, wie beispielsweise eine matte Kunststoffoberfläche, beispielsweise die Objektdaten aus einem 3-D-Kamera-Erfassungssystem und für spiegelnde Abschnitte des 3-D-Objekts, wie beispielsweise Glasoberflächen, beispielsweise die Objektdaten aus einem Deflektometrie-Erfassungssystem herangezogen werden. Vorteilhaft ist zudem, dass das 3-D-Objekt-Erfassungssystem die Qualität und damit die Verwertungseignung der Objektdaten aus unterschiedlichen Einzelerfassungssystemen selbstständig erkennt und jeweils die Objektdaten verwendet, die eine höhere Qualität des digitalen Abbilds bewirken.

Ferner können die Objektdaten der Einzelerfassungssysteme in kumulativer Zuordnung zueinander stehen, indem beispielsweise die Objektdaten aus einem Bildkamera-Einzelsystem um die Objektdaten aus einem Infrarot-Einzelsystem ergänzt werden, und so verdeckte Strukturinhomogenitäten, wie beispielsweise Beschädigungen, die oberflächenbeschichtet oder überlackiert wurden, erkennbar gemacht werden. Ein Objektpunkt kann so beispielsweise als oberflächenbeschichtete oder überlackierte Darstellung gezeigt werden und es kann an demselben Objektpunkt gleichzeitig die Oberfläche unter der Oberflächenbeschichtung dem Betrachter offenbart werden.

Ferner ermöglicht das digitale Abbild es als weiteren Vorteil, das 3-D-Objekt in verschiedenen Ansichten, in verschiedenen Perspektiven, beispielsweise als 360°-Ansicht, darzustellen. Ferner ist es möglich, dass ein 3-D-Objekt, welches bewegliche Abschnitte aufweist, in unterschiedlichen Anordnungen dieser beweglichen Abschnitte erfasst wird, beispielsweise ein Behältnis als geschlossenes oder geöffnetes Behältnis.

Ein besonderer Vorteil liegt darin, dass im Ergebnis ein digitales Abbild des 3-D-Objekts erlangbar ist, das eine ausreichende Datenbasis insbesondere für folgende wichtige Anwendungen aufweist.

Zum ersten ist das digitale Abbild geeignet, um Abweichungen eines 3-D-Objekts mit normierter Sollbeschaffenheit von einer normativen Vorgabe, beispielsweise durch ein CAD-Modell, zu erfassen und hieraus automatisiert erforderliche Maßnahmen, wie ein etwa erforderlicher Austausch bei einem Verschleißteil oder eine etwa erforderliche Aussonderung eines Bauteils aus einer Fertigung mit Fehlern, abzuleiten, wobei alles in digitaler Form erfolgen kann.

Zum zweiten kann durch Weiterverarbeitung des digitalen Abbilds automatisiert eine Bewertung des 3-D-Objekt erfolgen Bei einer solchen Bewertung kann es sich beispielsweise auch um eine kommerzielle Bewertung handeln, so dass Kaufentscheidungen beispielsweise über räumlich entfernte gebrauchte Güter ermöglicht werden, deren direkte Inaugenscheinnahme durch einen Interessenten sonst mit einem unverhältnismäßigen Aufwand verbunden wäre.

Von besonderem Vorteil sind die Manipulationssicherheit und die zuverlässige Dokumentation der erfassten Beschaffenheit eines 3-D-Objekt.

Ein weiterer Vorteil liegt in der Modularität des 3-D-Objekterfassungssystems. Je nach Bedarf, also je nach Qualitätsvorgabe oder nach besonderem Erfassungsziel kann das 3-D-Objekterfassungssystem mit unterschiedlichen Einzelerfassungseinheiten aus der genannten Gruppe bestückt werden.

Zusammengefasst beruht das 3-D-Objekt-Erfassungssystem insbesondere darauf, dass alle Sensoren, vorliegend als Einzelerfassungssysteme bezeichnet, auf ein und dasselbe Koordinatensystem kalibriert sind. Dabei ist die Anzahl und die Art der Sensoren variabel und prinzipbedingt nicht begrenzt. Die Sensoren erfassen Objektdaten dabei bereits insofern mehrfach, weil eine Erfassung in unterschiedlichen Winkelpositionen infolge der Drehbewegung des 3-D-Objekts auf der Plattform erfolgt. Ferner erfolgt die Erfassung aufgrund der unterschiedlichen Einzelerfassungssysteme mehrfach. Die resultierende Qualität aus den erfassten Objektdaten wird erhöht, weil auch unsichere Aussagen aus einer Erfassung durch Hinzuziehen anderer unsicherer Aussagen aus einer oder mehreren weiteren Erfassungen verwertbar werden.

Anders ausgedrückt wird also derselbe Punkt des 3-D-Objekts in einer Dimension mehrfach, aber auch in mehreren Dimensionen erfasst. Als Dimension wird in diesem Sinne eine Art einer Information, wie sie sich aus einer Eigenschaft des 3-D-Objekts, wie beispielsweise aus einer geometrische Eigenschaft oder beispielsweise aus dem Vorliegen oder Nichtvorliegen einer visuell nicht wahrnehmbaren Beschädigung, ergibt, verstanden.

Es werden zu einem Objektpunkt alle Objektdaten, mithin alle Informationen, zusammengefasst und dabei primäre Objektdaten (als Raumkoordinatendaten x, y, z sowie gesicherte Daten zu Eigenschaften) gebildet. Die primären Objektdaten und die auf den gleichen Objektpunkt bezogenen sekundären Objektdaten werden als mehrere Layer dargestellt, weshalb dies auch als Multi-Layer-Information bezeichnet werden kann. Jeder Layer beinhaltet Informationen unterschiedlicher Art. Jede Informationsart kann auch als eine Dimension bezeichnet werden, weshalb auch von einer mehrdimensionalen Erfassung, von mehrdimensionalen Informationen und oder einer mehrdimensionalen Darstellung gesprochen werden kann. Durch die Mehrdimensionaliät erhält der Betrachter mehr Informationen als bei einer rein räumlichen Darstellung des 3-D-Objekts.

Im Ergebnis der Erfassung des 3-D-Objekts wird ein digitales Abbild mit mehreren Informationsarten bereitgestellt, so dass das digitale Abbild ausgebildet ist, einen digitalen Zwilling des erfassten 3-D-Objekts darzustellen.

Das digitale Abbild als digitaler Zwilling ermöglicht es, dass das erfasste 3-D-Objekt auch in einem Vitual-Reality-Format, also in Virtueller Realität angesehen werden kann.

Dies betrifft die Ebene der Maschine-Mensch-Kommunikation.

Das digitale Abbild als digitaler Zwilling ermöglicht es darüber hinaus, dass die in ihm aggregierten Informationen automatisiert, beispielsweise für eine Bewertung eines Verschließteils als weiter verwendbar oder als auszutauschen, weiterverarbeitet werden können. Ein weiteres Beispiel ist das Erkennen der Identät eines erfasssten Bauteils mittels eines Objekterkennungsalgorithmus, so dass beispielsweise ein richtiges Ersatzteil ausgewählt wird.

Dies betrifft die Ebene der Maschine-Maschine-Kommunikation.

Gemäß einer vorteilhaften Weiterbildung weist das 3-D-Objekt-Erfassungssystem eine Umhausung auf. Dabei ist die Objektpositionierungseinheit innerhalb der Umhausung angeordnet. Die Umhausung bewirkt insbesondere den Vorteil, dass definierte Lichtverhältnisse oder Infrarotstrahlungsverhältnisse bei den Erfassungsvorgängen erreicht werden können und insbesondere Störlichtquellen oder Störwärmequellen abgeschirmt werden. Damit kann vorteilhaft die Genauigkeit der erfassten Objektdaten erhöht werden. Zugleich wird die Umgebung und insbesondere das Personal vor Licht-, Wärme- oder Laserquellen der Einzelerfassungssysteme geschützt. Vorzugsweise kann die Umhausung zugleich ganz oder teilweise die Positionierungseinheit der Objekterfassungseinheit ausbilden und die Lagebeziehung der Einzelerfassungssysteme festlegen. Vorzugsweise ist auch die Objekterfassungseinheit innerhalb der Umhausung angeordnet.

In einer weiteren vorteilhaften Weiterbildung weist das 3-D-Objekt-Erfassungssystem zusätzlich einen Unterflurscanner auf, wobei der Unterflurscanner ausgebildet ist, Objektdaten einer Objektunterseite zu erfassen und an die Auswertungseinheit zu übertragen und wobei die Objektdaten von der Auswertungseinheit in die Erzeugung des digitalen Abbilds einbezogen werden.

Dem liegt zugrunde, dass die Einzelerfassungssysteme so angeordnet sind, dass deren Erfassungsbereich von dem sich auf der Plattform drehenden 3-D-Objekt zwar die Oberseite, Vorderseite, die Rückseiten und die beiden seitlichen Objektseiten gut erfassen kann, aber die Unterseite des 3-D-Objekts nur bedingt erfassbar ist.

Durch den Unterflurscanner kann vorteilhaft auch die Beschaffenheit der Objektunterseite erfasst werden. Dies ist insbesondere vorteilhaft wenn dort funktionale Bauteile vorhanden sind.

Nach einer weiteren Weiterbildung weist das 3-D-Objekt-Erfassungsrfassungssystem zusätzlich einen Innenraumscanner auf. Mittels des Innenraumscanners werden Objektdaten eines etwaigen Innenraums eines 3-D-Objekts erfasst und an die Auswertungseinheit zur Einbeziehung in die Erzeugung des digitalen Abbilds zur Verfügung gestellt. Dies kann insbesondere bei solchen 3-D-Objekten relevant sein, welche ein Gehäuse um einen Innenraum aufweisen wie beispielsweise eine beispielsweise bei einer Bearbeitungsmaschine der Fall ist, bei der der Bearbeitungsraum den Innenraum bildet, der von einer Schutzumhausung umgeben ist. Der Innenraumscanner kann dabei nach allen Erfassungsverfahren arbeiten, wie sie bei den Einzelerfassungssystemen der Objekterfassungseinheit erläutert sind, wie beispielsweise 3-D Kamera-Erfassungssystem, Bildkamera-Erfassungssystem oder Infrarot-Erfassungssystem. Insbesondere kann der Innenraumscanner mehrteilig ausgebildet sein und zugleich mehrere dieser Erfassungsverfahren anwenden. Die Objektpunkte, zu denen von dem Innenraumscanner Objektdaten erfasst werden, werden durch die Auswertungseinheit in das einheitliche Raumkoordinatensystem integriert.

Nach einer anderen Weiterbildung weist das 3-D-Objekt-Erfassungssystem ein Vergleichsmodul auf. Das Vergleichsmodul weist eine Datenbasis mit Daten zu einem normativen digitalen Abbild auf. Die Datenbasis kann als interne Datenbank oder auch als eine externe Datenbank vorliegen. Eine externe Datenbank ermöglicht als zusätzlichen Vorteil eine zentrale Datenpflege. Das normative digitale Abbild liegt vorzugsweise als CAD-Modell vor und definiert eine Sollbeschaffenheit, beispielsweise eine Werkstücks bei einer Fertigung oder eines Verschleißteils, das zur Überprüfung seines Zustands erfasst wird.

Das Vergleichsmodul ist ausgebildet, einen Vergleich zwischen dem digitalen Abbild und dem normativen Abbild durchzuführen und ein digitaltes Differenzabbild zu erzeugen. Das digitale Differenzabbild beschreibt, inwiefern der Zustand des 3-D-Objekt, dass erfasst wurde, von dem normativen Zustand abweicht. Das digitale Differenzabbild weist somit insbesondere Fertigungsfehler, Verschleiß oder Beschädigungen aus. Somit kann beispielsweise eine Ausgabe als Fehlerbericht oder Schadensbericht erfolgen. Diese Zustandsinformationen können zudem eine Grundlage für Aussagen zu erforderlichen Maßnahmen wie Austausch oder Reparatur oderr zu dem Handelswert des erfassten 3-D-Objekts sein.

Die Erfindung wird als Ausführungsbeispiel anhand von
- Fig. 1: Draufsicht in schematischer Darstellung
- Fig. 2: Blockschaltbild mit Reparaturberechnungsmodul und Wertermittlungsmodul näher erläutert.

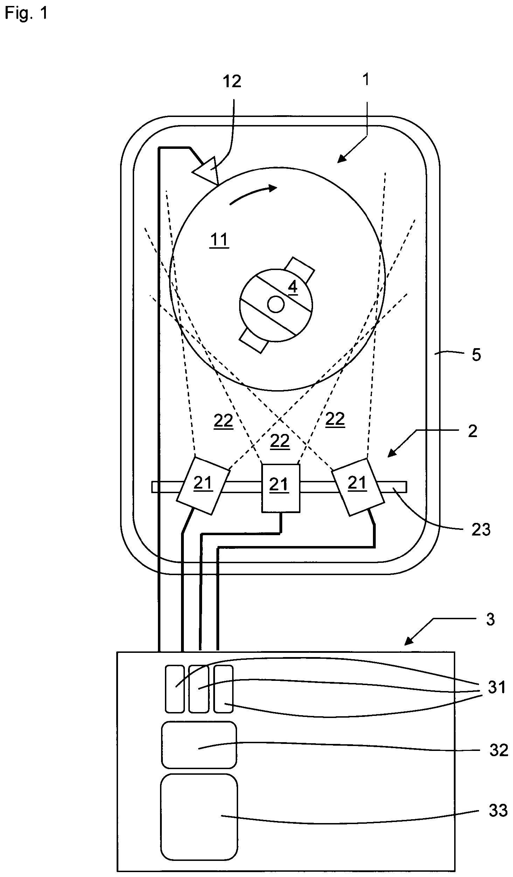

Fig. 1 zeigt ein erstes Ausführungsbeispiel eines erfindungsgemäßen 3-D-ObjektErfassungssystems.

Die Objektpositionierungseinheit 1 weist eine drehbare Plattform 11 auf, auf welche ein 3-D-Objekt 4 aufgestellt werden kann. Im Ausführungsbespiel liegt das 3-D-Objekt als eine Maschinenbaugruppe vor. Die Drehbarkeit der Plattform 11 ist durch den Pfeil veranschaulicht. Die Drehposition und damit die Winkelstellung der Plattform 11 wird durch die Plattformpositionserfassungseinheit 12 erfasst und an die Auswertungseinheit 3 übertragen.

Im Ausführungsbeispiel weist die Objekterfassungseinheit 2 drei Einzelerfassungssysteme 21, jeweils mit einem Erfassungsbereich 22, auf. Der Erfassungsbereich 22 ist so ausgerichtet, dass das auf der Plattform 11 befindliche 3-D-Objekt 4 davon umfasst wird. Im Ausführungsbeispiel überschneiden sich die Erfassungsbereiche 22. Die Einzelerfassungssysteme 21 sind an einer Positionierungseinheit 23, die als Gestell ausgebildet ist, starr montiert. Durch die starre Montage ist sichergestellt, dass nach erfolgter Kalibrierung alle von den Einzelerfassungssystemen erfassten Objektdaten zu Objektpunkten des 3-D-Objekts einem einheitlichen Raumkoordinatensystem zuordenbar sind. Bei den Einzelerfassungssystemen 21 handelt es sich im Ausführungsbeispiel um eine 3-D-Kamera-Einheit, eine Bildkameraeinheit und eine Infrarot-Erfassungseinheit.

In einem gegenüber dem Ausführungsbeispiel nach Fig. 1 modifizierten besonders vorteilhaften Ausführungsbeispiel weist die Objekterfassungseinheit fünf Einzelerfassungseinheiten auf, wobei es sich um eine 3-D-Kamera-Einheit, eine Bildkameraeinheit, eine Infrarot-Erfassungseinheit, eine Deflektometrie-Erfassungseinheit und eine Musterlichtprojektions-Erfassungseinheit handelt.

In dem Ausführungsbeispiel nach Fig. 1 ist sowohl die Objektpositionierungseinheit 1 als auch die Objekterfassungseinheit 2 in dem Innenraum einer Umhausung 5 angeordnet. Diese weist eine verschließbare Öffnung (in Fig. 1 nicht dargestellt) auf, durch welche das 3-D-Objekt 4 in den Innenraum bisz zu der Plattform 11 gefahren und dort aufgestellt sowie nach erfolgter Erfassung wieder herausgefahren werden kann. Die Objekterfassungseinheit 2 weist im Ausführungsbeispiel ferner Mittel zur Beleuchtung des 3-D-Objekts 4 mit definierter Lichtstärke und definierter Farbtemperatur auf, um die Präzision der Objektdaten zu erhöhen. Die Mittel zur Beleuchtung sind in Fig. 1 nicht dargestellt.

Ferner weist das Ausführungsbeispiel gemäß Fig. 1 eine Auswertungseinheit 3 auf. Bei der Auswertungseinheit 3 handelt es sich im Ausführungsbeispiel um ein Computersystem.

Dabei erhält jedes der drei Einzelbewertungsmodule 31 der Auswertungseinheit 3 die Objektdaten von dem jeweils zugeordneten Einzelerfassungssystem 21 der drei Einzelerfassungssysteme 21 über Datenleitungen. Sämtliche Datenleitungen zur Auswertungseinheit 3 von den Einzelerfassungssystemen 21 und von der Plattformpositionserfassungseinheit 12 sind ohne Bezugszeichen dargestellt. Die Einzelbewertungsmodule 21 führen eine Bewertung der Qualität der Objektdaten durch. Dazu ist ein Qualitätswert der Erfassungsqualität voreingestellt. Erreichen die Objektdaten den eingestellten Qualitätswert oder überschreiten sie ihn, werden die Objektdaten als verwertbare Objektdaten vorkategorisiert und an das Gesamtbewertungsmodul 32 weiter übertragen. Erreichen die Objektdaten den eingestellten Qualitätswert nicht, werden die Objektdaten als nicht verwertbare Objektdaten vorkategorisiert und nicht weitergeleitet. Hierdurch wird es ermöglicht, dass nur ausreichend zuverlässige Objektdaten in das später zu bildende digitale Abbild eingehen, so dass auch das digitale Abbild einen hohen Zuverlässigkeitsgrad aufweist.

In dem Gesamtbewertungsmodul 32 werden anhand der Koordinatendaten zu den Objektpunkten die verwertbaren Objektdaten einander zugeordnet. Dieser Zuordnung liegt zu Grunde, dass der Auswertungseinheit 3 durch die definierte Position der Einzelerfassungssysteme 21 mittels der Positionierungseinheit 23 und der mittels der Plattformpositionserfassungseinheit 12 bekannten Winkelposition der Plattform 11 und damit des aufgestellten 3-D-Objekts 4 eine Zuordnung zu einem einheitlichen Raumkoordinatensystem für alle Einzelerfassungssysteme 21 möglich ist. Nach erfolgter Zuordnung wird durch das Gesamtbewertungsmodul 32 ein Vergleich des Qualitätswertes der verwertbaren Objektdaten eines jeden der Einzelerfassungssysteme 21 mit denen der anderen Einzelerfassungssysteme 21 durchgeführt. Im Ergebnis das Vergleichs werden die verglichenen verwertbaren Objektdaten nach dem Rang kategorisiert. Die Objektdaten mit dem höchsten Qualitätswert erhalten den höchsten Rang. Die Objektdaten mit dem höchsten Rang werden als primäre Objektdaten kategorisiert. Die Objektdaten mit niedrigerem Rang werden als sekundäre Objektdaten kategorisiert.

Die primären und die sekundären Objektdaten werden an das Generierungsmodul 33 übertragen. Das Generierungsmodul ordnet die Koordinatendaten aus den Objektdaten der Einzelerfassungsysteme 21 unter Einbeziehung der Plattformpositionsdaten einem einheitlichen Raumkoordinatensystem zu. Ferner wird auf der Grundlage der primären Objektdaten zunächst ein digitales Basisabbild des 3-D-Objekts 4 in dem einheitlichen Raumkoordinatensystem erzeugt. Das digitale Basisabbild des 3-D-Objekts 4 wird dann durch Hinzufügung der sekundären Objektdaten anhand der Koordinatendaten zu einem digitalen Abbild des 3-D-Objekts 4 ergänzt. Dieses digitale Abbild wird dann ausgebbar bereitgestellt. Im Ausführungsbeispiel wird das digitale Abbild als Datei übertragen.

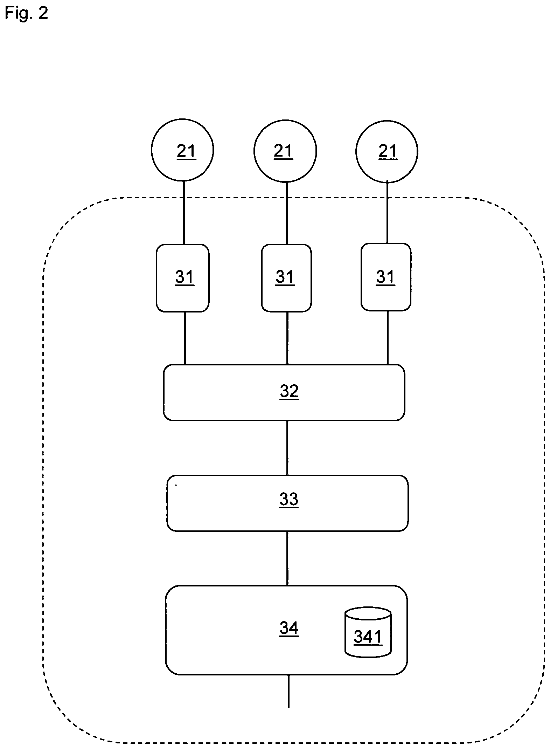

Fig. 2 zeigt ein weiteres Ausführungsbeispiel in einer Darstellung als Blockschaltbild.

Für die Erfassungseinheiten 21, die Einzelbewertungsmodule 31, das Gesamtbewertungsmodul 32 und das Generierungsmodul 33 gelten in entsprechender Weise die Erläuterungen zu dem Ausführungsbeispiel gemäß Fig.1.

Nachdem das digitale Abbild durch das Generierungsmodul 33 erzeugt wurde, wird es in dem Ausführungsbeispiel gemäß Fig. 2 an ein Vergleichsmodul 34 übertragen. Das Vergleichsmodul 34 enthält eine Datenbasis 341 als Datenbank mit Daten zu normativen digitalen Abbildern, wobei auch das normative Abbild der erfassten 3-D-Objekt 4, vorliegend der Maschinenbaugruppe enthalten ist. Das Vergleichsmodul 34 erkennt anhand des digitalen Abbilds den Typ des erfassten 3-D-Objekts 4, also den Typ der Maschinenbaugruppe und nimmt einen Vergleich zwischen dem digitalen Abbild des erfassten 3-D-Objekts 4, das es von dem Generierungsmodul 33 erhalten hat, und dem normativen Abbild des entsprechenden Typs, das es der Datenbasis 341 entnommen hat, vor und erzeugt ein digitaltes Differenzabbild. Das digitale Differenzabbild enthält die Informationen über Abweichungen der erfassten Maschinenbaugruppe von einer original hergestellten Maschinenbaugruppe, so dass insbesondere Beschädigungen erkennbar sind.

### Verwendete Bezugszeichen

- 1: Objektpositionierungseinheit
- 11: Plattform
- 12: Plattformpositionserfassungseinheit
- 2: Objekterfassungseinheit
- 21: Einzelerfassungssystem
- 22: Erfassungsbereich
- 23: Positionierungseinheit
- 3: Auswertungseinheit
- 31: Einzelbewertungsmodul
- 32: Gesamtbewertungsmodul
- 33: Generierungsmodul
- 34: Vergleichsmodul
- 341: Datenbasis des Vergleichsmoduls
- 4: 3-D-Objekt
- 5: Umhausung

## Patentansprüche

1. 3-D-Objekt-Erfassungssystem,
aufweisend eine Objektpositionierungseinheit (1), eine Objekterfassungseinheit (2) und eine Auswertungseinheit (3),
wobei die Objektpositionierungseinheit eine Plattform (11) und eine Plattformpositionserfassungseinheit (12) aufweist, wobei die Plattform (11) ausgebildet ist, ein 3-D-Objekt (4) hierauf aufzustellen, wobei die Plattform (11) rotierbar um eine Vertikalachse des aufgestellten 3-D-Objekts (4) ist, und wobei die Plattformpositionserfassungseinheit (12) ausgebildet ist, Plattformpositionsdaten zu erfassen und diese an die Auswertungseinheit (3) übertragbar bereitzustellen,
wobei die Objekterfassungseinheit (2) eine Anzahl von mindestens zwei Einzelerfassungssystemen (21) aus einer Gruppe bestehend aus:
- 3-D Kamera-Erfassungssystem
- Bildkamera-Erfassungssystem
- Infrarot-Erfassungssystem
- Lasertriangulation-Erfassungssystem
- Musterlichtprojektion-Erfassungssystem
- Deflektometrie-Erfassungssystem
aufweist,
wobei jedes Einzelerfassungssystem (21) einen Erfassungsbereich (22) aufweist, wobei der Erfassungsbereich (22) zumindest abschnittsweise das 3-D-Objekt (4) umfasst
eine Positionierungseinheit (23), welche eine Lagebeziehung der Einzelerfassungssysteme zueinander und zu der Objektpositionierungseinheit festlegt, wobei mittels jedem der mindestens zwei Einzelerfassungssysteme Objektdaten von Objektpunkten des 3-D-Objekts (4) erfassbar und an die Auswertungseinheit übertragbar bereitstellbar sind, wobei die Objektdaten Koordinatendaten der Objektpunkte enthalten
wobei die Auswertungseinheit (3) Einzelbewertungsmodule (31) für jedes der mindestens zwei Einzelerfassungssysteme (21), ein Gesamtbewertungsmodul (32) und ein Generierungsmodul (33) aufweist,
wobei durch jedes Einzelbewertungsmodul (31) eine Bewertung einer Erfassungsqualität der Objektdaten und auf der Grundlage der Bewertung eine Vorkategorisierung als verwertbare Objektdaten bei einem Erreichen eines einstellbaren Qualitätswertes der Erfassungsqualität und als nicht verwertbare Objektdaten bei einer Unterschreitung des Qualitätswertes durchführbar ist und verwertbare Objektdaten an das Gesamtbewertungs-modul (32) übertragbar bereitstellbar sind, wobei durch das Gesambewertungsmodul (32) anhand der Koordinatendaten zu den Objektpunkten die verwertbaren Objektdaten einander zuordenbar sind, wobei ein Vergleich des Qualitätswertes der verwertbaren Objektdaten eines Einzelerfassungssystems (21) mit dem Qualitätswert der verwertbaren Objektdaten eines weiteren Einzelerfassungssystems (21) durchführbar ist, wobei eine Rangkategorisierung der verwertbaren Objekt-daten der Einzelerfassungssysteme (21) in Abhängigkeit von dem Qualitätswert als primäre Objektdaten und als sekundäre Objektdaten durchführbar ist,
wobei das Generierungsmodul (33) ausgebildet ist, die Koordinatendaten aus den Objektdaten der Einzelerfassungsysteme (21) unter Einbeziehung der Plattformpositionsdaten einem einheitlichen Raumkoordinatensystem zuzuordnen, auf der Grundlage der primären Objektdaten ein digitales Basisabbild des 3-D-Objekts (4) in dem einheitlichen Raumkoordinatensystem zu erzeugen, das digitale Basisabbild des 3-D-Objekts (4) durch Hinzufügung der sekundären Objektdaten anhand der Koordinatendaten zu einem digitalen Abbild des 3-D-Objekts (4) zu ergänzen und das digitale Abbild ausgebbar bereitzustellen.

2. 3-D-Objekt-Erfassungssystem nach Anspruch 1,
**dadurch gekennzeichnet,**
**dass** das 3-D-Objekt-Erfassungssystem eine Umhausung (5) aufweist, wobei die Objektpositionierungseinheit (1) innerhalb der Umhausung (5) angeordnet ist.

3. 3-D-Objekt-Erfassungssystem nach einem der vorhergehenden Ansprüche,
**dadurch gekennzeichnet,**
**dass** das 3-D-Objekt-Erfassungssystem zusätzlich einen Unterflurscanner aufweist, wobei mittels des Unterflurscanners Objektdaten einer Unterseite des 3-D-Objekts erfasst und an die Auswertungseinheit zur Einbeziehung in die Erzeugung des digitalen Abbilds zur Verfügung gestellt werden.

4. 3-D-Objekt-Erfassungssystem nach einem der vorhergehenden Ansprüche,
**dadurch gekennzeichnet,**
**dass** das 3-D-Objekt-Erfassungssystem zusätzlich einen Innenraumscanner aufweist, wobei mittels des Innenraumscanners Objektdaten eines Innenraums des 3-D-Objekts erfasst und an die Auswertungseinheit zur Einbeziehung in die Erzeugung des digitalen Abbilds zur Verfügung gestellt werden.

5. 3-D-Objekt-Erfassungssystem nach einem der vorhergehenden Ansprüche,
**dadurch gekennzeichnet,**
**dass** das 3-D-Objekt-Erfassungssystem ein Vergleichsmodul (34) aufweist, wobei das Vergleichsmodul (34) eine Datenbasis mit Daten zu einem normativen digitalen Abbild aufweist, wobei das Vergleichsmodul (34) ausgebildet ist, einen Vergleich zwischen dem digitalen Abbild und dem normativen Abbild durchzuführen und ein digitaltes Differenzabbild zu erzeugen.

## Claims

1. 3D object sensing system
comprising an object positioning unit (1), an object sensing unit (2) and an evaluation unit (3),
wherein the object positioning unit has a platform (11) and a platform position sensing unit (12), wherein the platform (11) is designed to place a 3D object (4) thereon, wherein the platform (11) is rotatable about a vertical axis of the placed 3D object (4), and wherein the platform sensing unit (12) is designed to detect platform position data and to provide these data in a manner transmittable to the evaluation unit (3),
wherein the object sensing unit (2) comprises a number of at least two individual sensing systems (21) from a group consisting of:
- 3D camera sensing system
- image camera sensing system
- infrared sensing system
- laser triangulation sensing system
- pattern light projection sensing system
- deflectometry sensing system,
wherein each individual sensing system (21) has a sensing area (22), wherein the sensing area (22) covers at least sections of the 3D object (4),
a positioning unit (23) which defines a positional relation of the individual sensing systems to each other and to the object positioning unit,
wherein by means of each of the at least two individual sensing systems, object data of object points of the 3D object (4) can be sensed and provided in a manner transmittable to the evaluation unit, wherein the object data contain coordinate data of the object points,
wherein the evaluation unit (3) comprises individual evaluation modules (31) for each of the at least two individual sensing systems (21), an overall evaluation module (32) and a generation module (33),
wherein by means of each individual evaluation module (31) an evaluation of a sensing quality of the object data and, on the basis of the evaluation, a precategorization as usable object data can be performed when an adjustable quality value of the sensing quality is achieved and as non-usable object data when the quality value falls below the adjustable quality value, and usable object data can be provided in a manner transmittable to the overall evaluation module (32), wherein the usable object data can be assigned to one another by the overall evaluation module (32) using the coordinate data for the object points, wherein a comparison of the quality value of the usable object data of an individual sensing system (21) with the quality value of the usable object data of a further individual sensing system (21) can be performed, wherein a ranking categorization of the usable object data of the individual sensing systems (21) can be performed as primary object data and as secondary object data depending on the quality value, wherein the generation module (33) is designed to assign the coordinate data from the object data of the individual sensing systems (21) including the platform position data to a uniform spatial coordinate system on the basis of the primary object data, to supplement the digital basic image of the 3D object (4) by adding the secondary object data on the basis of the coordinate data to form a digital image of the 3D object (4), and to provide the digital image in a manner capable of being output.

2. 3D object sensing system according to claim 1,
**characterized in that**
the 3D object sensing system comprises a housing (5), wherein the object positioning unit (1) is located inside the housing (5).

3. 3D object sensing system according to one of the preceding claims,
**characterized in that**
the 3D object sensing system additionally features an underfloor scanner such that object data of an interior space of the 3D object can be sensed by means of the underfloor scanner and made available to the evaluation unit for being included when generating the digital image.

4. 3D object sensing system according to one of the preceding claims,
**characterized in that**
the 3D object sensing system additionally features an interior equipment scanner such that object data of an interior space of the 3D object can be sensed by means of the interior equipment scanner and made available to the evaluation unit for being included when generating the digital image.

5. 3D object sensing system according to one of the preceding claims,
**characterized in that**
the 3D object sensing system features a comparison module (34), the comparison module (34) comprising a database with data relating to a normative digital image, the comparison module (34) being designed to perform a comparison between the digital image and the normative image and to generate a digital difference image.

## Revendications

1. Système de détection d'objet 3D
présentant une unité de positionnement d'objet (1), une unité de détection d'objet (2) et une unité d'évaluation (3),
dans lequel l'unité de positionnement d'objet comporte une plateforme (11) et une unité de détection de position de plateforme (12), dans lequel la plateforme (11) est conçue pour y placer un objet 3D (4), dans lequel la plateforme (11) est rotative autour d'un axe vertical de l'objet 3D (4) placé, et dans lequel l'unité de détection de position de plateforme (12) est conçue pour détecter des données de position de plateforme et les mettre à disposition de manière transmissible à l'unité d'évaluation (3),
dans lequel l'unité de détection d'objet (2) comprend un certain nombre d'au moins deux systèmes de détection individuels (21) choisis dans un groupe constitué d'un:
- système de détection de caméra 3D
- système de détection à appareil photographique
- système de détection à infrarouge
- système de détection à triangulation laser
- système de détection à projection de lumière à motif
- système de détection à déflectométrie ,
dans lequel chaque système de détection individuel (21) présente une zone de détection (22), la zone de détection (22) comprenant l'objet 3D (4) au moins par sections,
une unité de positionnement (23) qui détermine une relation de position des systèmes de détection individuels les uns par rapport aux autres et par rapport à l'unité de positionnement d'objet,
dans lequel des données d'objet de points d'objet de l'objet 3D (4) peuvent être saisies au moyen de chacun des au moins deux systèmes de saisie individuels et peuvent être mises à disposition de manière transmissible à l'unité d'évaluation, les données d'objet contenant des données de coordonnées des points d'objet,
dans lequel l'unité d'évaluation (3) comporte des modules d'évaluation individuels (31) pour chacun des au moins deux systèmes de détection individuels (21), un module d'évaluation global (32) et un module de génération (33),
dans lequel une évaluation d'une qualité de détection des données d'objet peut être effectuée par chaque module d'évaluation individuel (31) et, sur la base de l'évaluation, une pré-catégorisation peut être réalisée en tant que données d'objet utilisables lorsqu'une valeur de qualité réglable de la qualité de détection est atteinte et en tant que données d'objet non utilisables lorsque la valeur de qualité n'est pas atteinte, et des données d'objet utilisables peuvent être mises à disposition de manière transmissible au module d'évaluation global (32),
dans lequel les données d'objet utilisables pouvant être attribuées les unes aux autres par le module d'évaluation global (32) à l'aide des données de coordonnées relatives aux points d'objet, dans lequel une comparaison de la valeur de qualité des données d'objet utilisables d'un système de détection individuel (21) avec la valeur de qualité des données d'objet utilisables d'un autre système de détection individuel (21) peut être effectuée, dans lequel une catégorisation par ordre de priorité des données d'objet utilisables des systèmes de détection individuels (21) peut être effectuée en tant que données d'objet primaires et en tant que données d'objet secondaires en fonction de la valeur de qualité,
dans lequel le module de génération (33) est conçu pour associer les données de coordonnées provenant des données d'objet des systèmes de détection individuels (21), en tenant compte des données de position de plateforme, à un système de coordonnées spatiales uniforme, pour produire, sur la base des données d'objet primaires, l'image de base numérique de l'objet 3D (4) dans le système de coordonnées spatiales uniforme, pour compléter l'image de base numérique de l'objet 3D (4), en ajoutant les données d'objet secondaires sur la base des données de coordonnées à l'image numérique de l'objet 3D (4) et pour fournir et transmettre l'image numérique.

2. Système de détection d'objet 3D suivant la revendication 1,
est **caractérisé en ce**
**que** le système de détection d'objet 3D présente un boîtier (5), l'unité de positionnement d'objet (1) étant disposée à l'intérieur du boîtier (5).

3. Système de détection d'objet 3D suivant l'une quelconque des
revendications précédentes
est **caractérisé en ce**
**que** le système de détection d'objet 3D présente en plus un scanner sous-sol, dans lequel des données d'objet d'une face inférieure de l'objet 3D sont détectées au moyen du scanner sous-sol et mises à disposition à l'unité d'évaluation pour être intégrées dans la génération de l'image numérique.

4. Système de détection d'objet 3D suivant l'une quelconque des
revendications précédentes
est **caractérisé en ce**
**que** le système de détection d'objet 3D présente en plus un scanner d'intérieur, dans lequel des données d'objet d'un espace intérieur de l'objet 3D sont détectées au moyen du scanner d'intérieur et mises à disposition à l'unité d'évaluation pour être intégrées dans la génération de l'image numérique.

5. Système de détection d'objet 3D suivant l'une quelconque des
revendications précédentes
est **caractérisé en ce**
**que** le système de détection d'objet 3D comporte un module de comparaison (34), le module de comparaison (34) présentant une base de données avec des données relatives à une image numérique normative, le module de comparaison (34) étant conçu pour effectuer une comparaison entre l'image numérique et l'image normative et pour générer une image numérique différentielle.
